# EUROPÄISCHE PATENTANMELDUNG

(11) **EP 3 569 311 A1**
(43) Veröffentlichungstag der Anmeldung: **20.11.2019**
(21) Anmeldenummer: 18173206.6
(22) Anmeldetag: 18.05.2018
(51) Int. Cl.: B01J 35/02, B01J 37/00, B01J 23/22, B01J 35/04, B29C 47/08, B33Y 10/00

(54) **MATRIZE MIT METALLGEDRUCKTEN TEILEN ZUR EXTRUSION VON FORMKÖRPERN**

(71) Anmelder: BASF SE, 67056 Ludwigshafen am Rhein (DE)
(72) Erfinder: Die Erfindernennung liegt noch nicht vor
(74) Vertreter: Schuck, Alexander

(57) **Zusammenfassung**

Die Erfindung bezieht sich auf eine Matrize (10) zur Extrusion von Katalysator-, Katalysatorträger- oder Adsorbensformkörper (60) in Fließrichtung (32) einer extrudierbaren Masse von einer Eintrittsseite (12) zu einer Austrittsseite (14) der Matrize umfassend eine Schale (56) und einen oder mehrere, Verdränger der extrudierbaren Masse darstellende Kanalbildner (18), die sich in Fließrichtung der extrudierbaren Masse erstrecken, dadurch gekennzeichnet, dass die Kanalbildner (18) metallgedruckt sind.

Vorzugsweise ist diese frei von Hohlräumen zur Aufnahme von extrudierbarer Masse ist, die sich rechtwinklig zur Fließrichtung (32) der extrudierbaren Masse erstrecken, und ist diese frei von rechtwinklig verlaufenden Verbindungen von Kanalbildnern (18) zu der inneren Seitenwand (22) der Matrize (10).

Des Weiteren bezieht sich die Erfindung auf ein Verfahren zur Herstellung mittels 3D-Metalldruck einer metallgedruckten Matrize (10) zur Extrusion von Katalysator-/Trägerformkörpern (60).

## Beschreibung

Die Erfindung betrifft Matrizen mit metallgedruckten Teilen zur Extrusion von Katalysatorformkörpern, Trägerformkörpern und Adsorbensformkörpern, sowie Verfahren zur Herstellung der Matrizen.

Heterogen-Katalysatoren können für chemische Prozesse oder Abgasbehandlungen oft in sogenannten Festbetten eingesetzt werden. Anders als bei Wirbelschicht-, Fließbett- oder Suspensions-Verfahren werden die Katalysatoren dabei in der Regel nicht als relativ feinteilige Pulver, sondern als geformte Körper eingesetzt. Die Katalysatorformkörper können dann entweder einzeln fixiert, etwa als monolithische Blöcke von sogenannten Wabenkörpern, wie beispielsweise in der Autoabgaskatalyse, oder als eine Schüttung vieler, relativ kleiner Formkörper in einem sogenannten Katalysatorbett angeordnet sein.

Als Reaktoren zum Einbau von Katalysatorbetten kommen typischerweise Horden-Reaktoren, Schütt-Reaktoren, Rohr-Reaktoren oder Rohrbündel-Reaktoren zum Einsatz. Typische Formkörper für Katalysatorbetten umfassen beispielsweise Zylinder, Hohlzylinder, Stern-Stränge und Triloben.

In EP 987 058 B1 werden beispielsweise Katalysatorformkörper mit einer wagenradartigen Struktur, also mit einem runden Profil und mehreren um eine zentrale Achse herum angeordneten tortenstückförmigen Aussparungen beschrieben. Die zur Extrusion verwendeten Matrizen werden allerdings nicht offenbart.

Geformte Heterogen-Katalysatoren können entweder durch Verformung einer katalytisch aktiven Masse oder einer entsprechenden Vorstufe oder durch Auftragen einer katalytisch aktiven Masse oder einer entsprechenden Vorstufe auf einen bereits geformten Träger hergestellt werden. Zum Auftragen einer katalytisch aktiven Masse oder einer entsprechenden Vorstufe auf einen bereits geformten Träger kommen beispielsweise Beschichtungs- oder Imprägnier-Verfahren zum Einsatz. Verfahren zur Verformung von katalytisch aktiven Massen oder von Trägermassen unterscheiden sind Tablettierung, Extrusion oder, insbesondere im Fall von Kugeln, Agglomerieren, etwa auf einem Drehteller.

Die vorliegende Erfindung betrifft die Herstellung von geformten Heterogen-Katalysatoren oder geformten Trägern für Heterogen-Katalysatoren oder geformten Adsorbentien. Insbesondere betrifft die Erfindung die Extrusion solcher Katalysatoren, Träger oder Adsorbentien.

Die grundliegenden Prinzipien einer Extrusion sind vielfach beschrieben worden, beispielsweise in Charles N. Satterfield Heterogeneous catalysis in Industrial Practice 2nd Edition, McGraw-Hill 1991 oder in J. F. LePage Catalyse de contact, Editions Technip 1978. Die Herstellung von Katalysatorformkörpern oder Trägerformkörpern durch Extrusion ähnelt typischen Verfahren zur Herstellung von geformten Nudeln (Pasta). Eine knetbare Masse wird über eine Presse oder Transportschnecken durch eine mit Öffnungen versehene Platte gepresst (extrudiert). Die Form des extrudierten Materials im Querschnitt senkrecht zur Extrusionsrichtung wird dabei durch die Form der Öffnungen in der Platte, durch die das Material verpresst wird, bestimmt. Eine solche mit Öffnungen versehene Platte wird als Matrize (im Englischen als "die") bezeichnet.

Die mittels Extrusion hergestellten Formkörper werden nach der Extrusion in der Regel einer thermischen Behandlung unterzogen. Dabei kann es sich um eine einfache Trocknung oder auch eine Behandlung (Kalzinierung) bei höheren Temperaturen handeln, bei denen auch eine stoffliche Umwandlung der Formkörper, beispielsweise unter Abspaltung bestimmter Zersetzungsprodukte (Gase) oder unter Ausbildung bestimmter kristalliner Phasen oder physikalischer Eigenschaften der Formkörper, stattfinden kann. Solche thermischen Behandlungen werden in der Regel in geeigneten Öfen diskontinuierlich oder bevorzugt kontinuierlich durchgeführt. Hierzu können beispielsweise Horden-Öfen, Bandtrockner, Bandkalzinierer oder Drehrohre eingesetzt werden. Der thermischen Behandlung der Formkörper kann auch ein Verfahrensschritt zum Absieben von kleinen Bruchstücken (Unterkorn) oder zusammengeklebten Formkörpern (Überkorn) und ein automatisierter Abfüllschritt in geeignete Behälter wie beispielsweise Fässer oder Big-Bags erfolgen.

Je nach Aufbau des Extrusionsapparates oder der Größe und Geometrie des extrudierten Formkörpers können ein oder mehrere Formkörper gleichzeitig nebeneinander extrudiert werden, so dass also die Platte, gegen die die zu extrudierende Masse gefördert wird, eine oder mehrere Öffnungen zur Ausformung entsprechender Formkörper aufweist. Die Öffnungen können direkt in einer Platte angeordnet sein. Oft werden aber Einsätze benutzt, die entsprechende Öffnungen aufweisen, und die dann in eine größere Platte eingesetzt werden, die entsprechende Aussparungen oder Halterungen aufweist. In diesem Fall wird dann oft von Matrizen (Einsätzen) und einer Matrizenplatte (Platte zur Aufnahme und Halterung der Matrizen) gesprochen.

Die Öffnungen in den Matrizen erfordern zum Ausformen qualitativ anspruchsvoller Katalysator-oder Trägerformkörper in der Regel eine gewisse Mindesttiefe, die Matrizen also eine gewisse Mindestdicke, so dass sich kanal- oder bohrungsartige Öffnungen ergeben. Beim Durchgang durch diese kanal- oder bohrungsartigen Matrizenöffnungen hat die Extrusionsmasse dann eine entsprechende Verweilzeit, um in der Formkörpergeometrie zu relaxieren.

Wie in US 7,582,588 B2 beschrieben, können Matrizen beispielsweise aus Edelstahl oder Polymeren hergestellt werden, wobei Polymere fertigungstechnisch bevorzugt sind und etwa durch Spritzguss-Verfahren nach Erstellung einer entsprechenden Vorlage hergestellt werden können.

Die Komplexität der erforderlichen Matrizen hängt stark von der gewünschten Formgebung ab. Massive Geometrien wie beispielsweise Vollzylinder oder Stränge mit einem sternförmigen Querschnitt lassen sich relativ einfach herstellen, in dem die Öffnungen der Matrizen ein entsprechend rundes oder sternförmiges Profil aufweisen. Auch Katalysator-Formkörper mit einem schraubenartigen Profil können, wie in US 8,835,516 B2 beschrieben, durch Extrusion hergestellt werden, indem Matrizen mit entsprechend profilierten Öffnungskanälen verwendet werden.

Formkörper in Form von Hohlzylindern oder gar mit mehreren bohrungsartigen Öffnungen erfordern entsprechend komplexer aufgebaute Matrizen. Dazu müssen Verdränger mit einem Profil entsprechend der bohrungsartigen Öffnungen der extrudierten Formkörper so in den Matrizenöffnungen positioniert werden, dass die Extrusionsmasse sich möglichst uneingeschränkt und gleichmäßig um die Verdränger herum in den Matrizenöffnungen ausbreiten kann. Gleichzeitig muss die Befestigung der Verdränger aber auch ausreichend stabil sein, um unter den erheblichen Kräfteeinwirkungen im Extruder nicht verformt, verschoben oder zerstört zu werden. Die Verdränger können so positioniert sein, dass sie in etwa in einer Linie mit der Ebene der Austrittsöffnung der Matrizen abschließen, sie können aber auch über diese Ebene hinausragen.

Matrizen zur Extrusion von kleeblattartigen Katalysatorformkörpern mit vier bohrungsartigen Aussparungen werden in WO 16/156042 A1 beschrieben. In GB 2 073 089 A werden Matrizen zur Extrusion von Pasta-Lebensmitteln mit einer hohlzylindrischen Formgebung beschrieben. Allerdings ist der relativ filigrane Aufbau für die in der Regel kleinskalige Herstellung frischer Pasta und auf eine einfache Reinigung hin ausgelegt.

Die rheologischen Eigenschaften von Massen zur Extrusion von Katalysatoren und Trägern stellen oftmals besondere Herausforderungen dar. Pasta im Lebensmittelbereich wird aus wenigen Zutaten wie Hartweizengries oder Mehl und Wasser und im industriellen Bereich in der Regel in für Pasta optimierten Anlagen hergestellt. Katalysatoren und Katalysatorträger werden dagegen oft in sogenannten Multi-Purpose-Anlagen in mehr oder weniger großen Auflagen im Wechsel mit anderen Katalysatoren oder Trägern hergestellt. Dabei wird eine Vielzahl von Materialien, im Allgemeinen anorganische Oxide, eingesetzt. Dass Fließverhalten dieser Materialien kann stark mit der Temperatur oder der Intensität und Dauer der einwirkenden mechanischen Kräfte schwanken. In der Regel ist daher ein möglichst ablenkungs- und turbulenzfreier Transport der Masse durch die Matrize vorteilhaft. Auch Toträume oder Bereiche in den Matrizen, in denen es zu Rückströmungen und damit zu Verweilzeitverteilungen der zu extrudierenden Masse kommt, können die Qualität der Extrusion deutlich verschlechtern.

In der US 7,582,588 B2 ist beispielsweise beschrieben, dass die Eingangsseite der Öffnungen von Matrizen trichterartig erweitert werden können, um ein besseres Strömungsverhalten zu erreichen. Beim Design von Matrizen können und sollten auch strömungstechnische Überlegungen einfließen. Insbesondere können auch theoretische Modelle oder EDV-gestützte Simulations-Methoden wie computational fluid dynamics (CFD) eingesetzt werden.

Die Herstellung von Matrizen für die Extrusion von Katalysator- oder Trägerformkörper mit komplexer Geometrie, also insbesondere von Matrizen, die mit mehreren Verdrängern ausgestattet und die verhältnismäßig dünn und filigran sind, beinhaltet fertigungstechnische Herausforderungen.

Es ist beispielsweise bekannt, Matrizen aus Kunststoffen durch Spritzguss oder auch durch Kombination von mehreren durch Spritzguss hergestellten Komponenten herzustellen. Ein Nachteil einer solchen Herstellung durch Spritzguss ist jedoch die relativ hohe Eintrittshürde, insbesondere wenn Matrizen nur in kleinen Stückzahlen hergestellt werden sollen, oder wenn eine Vielzahl von verschiedenen Matrizen hergestellt werden soll, um ein Matrizen-Design experimentell zu optimieren. Einschränkungen bestehen auch insoweit, dass die Matrize nach dem Öffnen der Spritzgussform dieser entnehmbar sein muss. Dies kann beispielsweise die Fertigung von Matrizen mit stark verdrillten oder eingeschnittenen Konturen mittels Spritzguss erschweren oder unmöglich machen.

In der US 8,835,516 wird beispielsweise die Herstellung Matrizen zur Herstellung von Katalysatoren mit einem verdrillten, schraubenförmigen Profil beschrieben. Hierzu werden Spritzgussformen mit entsprechend schraubenförmigen Pins (Einsätzen) versehen, die nach Ausformung der Matrize und vor Öffnen der Spritzguss-Form herausgeschraubt werden müssen, um die fertige Matrize entnehmen zu können.

Matrizen nach Stand der Technik können auch durch Behandlungen von Rohlingen beispielsweise aus Metall oder Kunststoff hergestellt werden. Beispielsweise können Öffnungen in solche Rohlinge gebohrt oder gefräst werden. Auch hier sind der Gestaltung der Matrizen fertigungstechnisch jedoch enge Grenzen gesetzt.

Nach Stand der Technik können Matrizen oder Komponenten für Matrizen aber auch additiv aus verschiedenen Komponenten zusammengebaut werden, beispielsweise zusammengeschweißt oder verschraubt werden. Beispielsweise lässt sich eine Matrize mit mehreren Verdrängern zur Herstellung von kleeblattartigen Katalysatorformkörpern mit vier Bohrungen, wie in WO 16/156042 A1 beschrieben, herstellen. Die Matrize besteht dabei, wie in den Figuren 1 und 2 gezeigt, aus zwei Komponenten: einem Hohlkörper, dessen Bohrung der äußeren Kontur des extrudierten Katalysator-Formkörpers entspricht. Dieser Hohlkörper ist vorteilhafter Weise in seiner äußeren Kontur so gestaltet, dass ein oder mehrere dieser Formköper in eine MatrizenPlatte eingefügt und befestigt werden können. In diesen Hohlkörper wird dann eine zweite Komponente, die die Verdränger umfasst, eingepasst, um die vollständige Matrize zu erhalten. Bevorzugt sind Hohlkörper und Einsatz so ausgestaltet, dass sie durch bloßes Ineinanderstecken so arretiert sind, dass sich der Einsatz insbesondere nicht um die Achse der Extrusionsrichtung relativ zum Hohlkörper verdrehen kann. Der Einsatz kann nach Stand der Technik beispielsweise im Spritzgussverfahren extrudiert oder additiv aus einer mit Öffnung versehenen Grundplatte und darauf senkrecht angebrachten stangenförmigen Körpern (Verdränger oder Kanalbildner) gefertigt werden. Beispielsweise kann eine Metallscheibe mit einem oder mehreren Bohrlöchern versehen werden. Bohrtechnisch bedingt sind diese Bohrungen typischerweise kreisrund und konisch. Durch Überlagerung von mehreren Bohrungen können auch nichtkreisrunde Öffnungen erzeugt werden. Allerdings ist das mühsam und die Herstellung einer strömungstechnisch optimierten Matrize stößt hier auf fertigungstechnische Einschränkungen. An die Grundplatte können dann mehrere entsprechend abgelängte Metallstangen mit einem entsprechend ausgewählten Durchmesser senkrecht angebracht werden. Dies kann beispielsweise durch Schweißen erfolgen. Für kreisrunde Verdränger sind abzulängende Stangen geeigneten Durchmessers oftmals kommerziell verfügbar. Sollen Verdränger mit spezielleren, beispielsweise sternförmigen Konturen eingesetzt werden, erfordert dies zusätzliche Fertigungsschritte. Eine genaue Positionierung der Stangen und eine Ausrichtung exakt senkrecht zur Metallscheibe ist insbesondere bei Matrizen für filigran dimensionierte Katalysator- oder Trägerformkörper schwierig. Gravierend sind auch die fertigungstechnisch bedingten Einschränkungen im Hinblick auf ein strömungstechnisch optimiertes Matrizen-Design.

Aufgabe der vorliegenden Erfindung ist deshalb, Matrizen zur Extrusion von Katalysatorformkörpern, Katalysatorträgerformkörpern und Adsorbensformkörpern sowie ein effizientes Verfahren zur Herstellung solcher Matrizen bereitzustellen. Die Matrizen sollen insbesondere strömungstechnisch vorteilhaft und die Herstellung von Formkörpern mit zahlreichen Kanälen und/oder filigranen Abmessungen ermöglichen.

Aufgabe der vorliegenden Erfindung ist auch, ein Verfahren zur Optimierung von Katalysator-, Katalysatorträger- oder Adsorbensformkörper und den zu deren Herstellung mittels Extrusion erforderlichen Matrizen zu finden, mit dem schnell und kostengünstig eine große Zahl von alternativen Matrizen zur Verfügung gestellt werden kann, und mit deren Hilfe sich die Eigenschaften der Formkörper und das Extrusionsverhalten der Extrusionsmassen mit den Matrizen experimentell untersuchen und bewerten lassen. In einem iterativen Prozess können die dabei gewonnenen Erkenntnisse für das Design verbesserter Matrizen genutzt werden, die dann wiederum schnell und kostengünstig für eine experimentelle Untersuchung und Bewertung bereitgestellt werden können.

Gelöst wird die Aufgabe durch eine Matrize (10) zur Extrusion von Katalysator-, Katalysatorträger- oder Adsorbensformkörpern (60) in Fließrichtung (32) einer extrudierbaren Masse von einer Eintrittsseite (12) zu einer Austrittsseite (14) der Matrize (10), umfassend eine Schale (56) und einen oder mehrere, Verdränger der extrudierbaren Masse darstellende Kanalbildner (18), die sich in Fließrichtung der extrudierbaren Masse erstrecken, dadurch gekennzeichnet, dass die Kanalbildner (18) metallgedruckt sind.

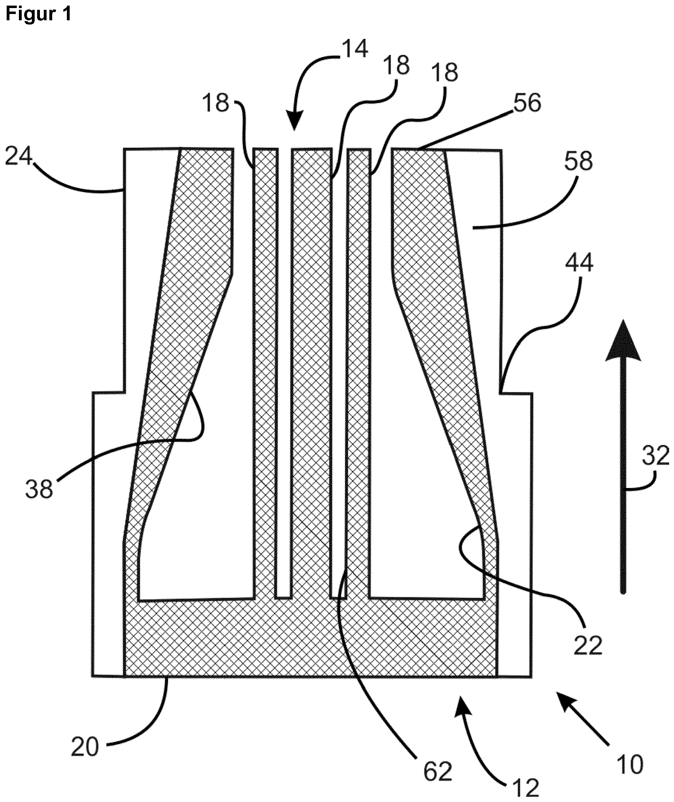

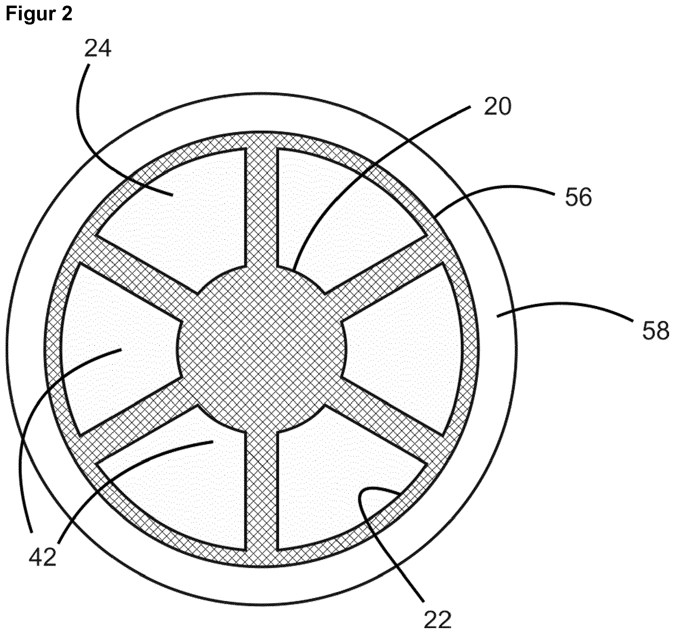

Insbesondere werden Matrizen zur Extrusion von Formkörpern mit relativ komplexen Geometrien erfindungsgemäß mittels 3D-Metallpulver-Laser-Druck hergestellt, also insbesondere Formkörper mit mehreren oder besonders kleinen oder verdrillten Bohrungen parallel zur Extrusionsrichtung. Die erfindungsgemäß hergestellten Matrizen haben dabei bevorzugt ein solches Design, dass im Inneren der Matrize die Konturen der mit der Extrusionsmasse in Kontakt kommenden Oberflächen der Matrizen oder Matrizenkomponenten weitgehend abgerundet und weitgehend keine Winkel ≤ 90° aufweisen. Insbesondere weisen die erfindungsgemäß hergestellten Matrizen vorteilhafterweise auch keine rechtwinklig zur Extrusionsrichtung ausgerichteten Abschnitte oder Verbindungsstege auf. Insbesondere weisen die erfindungsgemäßen Matrizen damit vorteilhafterweise auch keine Abschnitte ähnlich der in den Figuren 1 und 2 dargestellten durchlöcherten Platten, aber beispielsweise auch keine rechtwinklige Verbindung der als Verdränger wirkenden Abschnitte der Matrize zu der Innenwand der Matrize auf. In einer weiteren bevorzugten Ausführungsform der erfindungsgemäßen Matrizen zur Herstellung von Formkörpern mit mehreren Bohrungen sind auch bevorzugt nicht alle als Verdränger wirkenden Teile (Kanalbildner) der Matrize direkt mit der Innenwand der Matrize verbunden, sondern sind mit Teilen der Matrizen verbunden, die ihrerseits mit der Innenwand der Matrize verbunden sind (Verbindungsstege).

In einer bevorzugten Ausführungsform sind also die Verdränger der extrudierbaren Masse darstellenden Kanalbildner (18) über einen oder mehrere Verbindungsstege (36) an einer inneren Seitenwand (22) der Schale (56) befestigt oder weisen eine Verbindung (30) untereinander auf, wobei die Kanalbildner (18) und Verbindungsstege (36) metallgedruckt sind.

In einer weiterhin bevorzugten Ausführungsform ist die Matrize (10) frei von Hohlräumen zur Aufnahme von extrudierbarer Masse, die sich rechtwinklig zur Fließrichtung (32) der extrudierbaren Masse erstrecken.

In einer weiterhin bevorzugten Ausführungsform ist die Matrize (10) frei von rechtwinklig verlaufenden Verbindungen von Kanalbildnern (18) zu der inneren Seitenwand (22) der Matrize (10).

Die genannten bevorzugten Ausführungsformen sind strömungstechnisch vorteilhaft. Die Herstellung der die Kanalbildner und Verbindungsstege umfassenden Einheit (34) oder der Matrize (10) insgesamt durch 3D-Metalldruck unterliegt fertigungstechnisch nur geringen Einschränkungen.

So können Design-Varianten von Matrizen, die auf Grundlage von strömungstechnischen Überlegungen oder Simulationsrechnungen als vorteilhaft eingeschätzt werden, mit wenig Aufwand hergestellt werden, um das Design experimentell zu testen.

Design-Varianten von Katalysator- oder Träger- und Adsorbensformkörpern, die auf Grundlage von Simulationen oder theoretischen Überlegungen strömungstechnisch, hinsichtlich Stofftransport, Druckverlust oder Schüttdichte als vorteilhaft erscheinen, können ebenfalls mit wenig Aufwand hergestellt werden und experimentell getestet werden.

Mit Hilfe von CAD (computer aided design) entworfene Matrizen oder Matrizen-Komponenten können unmittelbar durch entsprechende Datei- und Software-basierte Steuerung des Fertigungsprozesses hergestellt werden.

Gegenstand der Erfindung ist auch ein Verfahren zur Herstellung mittels 3 D-Metalldruck einer metallgedruckten Matrize (10) oder eines metallgedruckten Einsatzes (34) zur Herstellung einer Matrize (10) zur Extrusion von Katalysator-, Katalysatorträger- oder Adsorbensformkörper (60), mit zumindest nachfolgenden Verfahrensschritten:
a) Aufbringen eines Metallpulvers in aufeinanderfolgenden Schichten,
b) vor Aufbringen einer nachfolgenden Metallpulverschicht Bestrahlung der vorhergehenden Pulverschicht mit einem Laser in einem vorgegebenen Bereich,
c) Aufschmelzen des Metallpulvers in dem vorgegebenen Bereich über dessen gesamte Schichtdicke der Metallpulverschicht durch die in Schritt b) eingebrachte Energie und Bildung einer kompakten Metallschicht, die mit der darunter liegenden kompakten Metallschicht verbunden ist,
d) durch abwechselndes Auftragen und Aufschmelzen mehrerer Pulverschichten übereinander Erzeugung der metallgedruckten Matrize (10) oder des metallgedruckten Einsatzes (34) als Verbindung aufgeschmolzener Lagen der übereinander aufgebrachten Metallpulverschichten.

Bevorzugt umfasst das Verfahren die zusätzlichen Schritte:
e) experimentelle Untersuchung der Matrize (10) hinsichtlich des Strömungsverhaltens der extrudierten Masse in der Matrize (10),
f) wiederholte Durchführung der Schritte a) bis e) und ggf. f) wobei der Aufbau der Matrize (10) verändert wird.

In einer bevorzugten Ausführungsform können auch Matrizen mit unterschiedlichem Design zusammen in einem 3D-Metall-Druck-Ansatz (in einem Pulverbett) gemeinsam hergestellt werden. Dadurch lassen sich schnell und kostengünstig eine große Zahl von Matrizen bereitstellen, um deren Eignung zur Herstellung von Katalysator-, Katalysatorträger- oder Adsorbensformkörpern mittels Extrusion zu untersuchen und zu beurteilen. Dabei können einerseits die Formkörper selbst hinsichtlich ihrer physikalischen und/oder chemischen Eigenschaften, wie beispielsweise Druckverlust oder Aktivität einer die Formkörper enthaltenden Schüttung, untersucht werden. Andererseits kann das Extrusionsverhalten der betreffenden Extrusionsmasse abhängig vom Aufbau der Matrizen untersucht und beurteilt werden. Anhand dieser experimentellen Ergebnisse, ggf. mit Unterstützung von Modellen oder rechnerischen Verfahren, können verbesserte Matrizen-Designs erarbeitet werden, die wiederum entsprechend experimentell untersucht und beurteilt werden können.

Gegenstand der Erfindung ist also auch ein Verfahren zur Entwicklung neuer mittels Extrusion hergestellter Katalysator-, Katalysatorträger- oder Adsorbensformkörper (60) mit den Schritten
(i) Herstellung mehrerer verschiedener Matrizen (10) mit unterschiedlichem Aufbau mit dem oben beschriebenen Verfahren, wobei die Herstellung der Matrizen (10) gleichzeitig oder nacheinander erfolgen kann,
(ii) Extrusion verschiedener Formkörper (60) mit den verschiedenen Matrizen (10),
(iii) experimentelle Untersuchung der verschiedenen Formkörper (60) im Hinblick auf ihre physikalischen und/oder chemischen Eigenschaften in einer Schüttung,
(iv) gegebenenfalls Wiederholung der Schritte (i) bis (iii), wobei der Aufbau der Matrizen (10) verändert wird.

In einer bevorzugten Ausführungsform der Matrize (10) ist ein Teil der Kanalbildner (18) miteinander verbunden.

Die Matrize (10) kann nur einen Kanalbildner (18) aufweisen. Häufig weist die Matrize (10) 2 bis 20 Kanalbildner (18) parallel zur Fließrichtung (32) der extrudierbaren Masse auf.

Die die sich in Fließrichtung (32) der extrudierbaren Masse erstreckenden Kanalbildner (18) können alle den gleichen Durchmesser oder verschiedene Durchmesser, beispielsweise voneinander verschiedene erste und zweite Durchmesser (26, 28) aufweisen. Sie können eine kreisrunde (52) oder eine Mehreckprofilkontur (54) aufweisen.

Die Matrize (10) kann aus einem metallgedruckten Einsatz (34), der die Kanalbildner (18) und Verbindungsstege (36) aufweist, und der separat gefertigten Schale (56) zusammengesetzt sein.

In einer bevorzugten Ausführungsform ist die Schale (56) aus einem Kunststoffmaterial, vorzugsweise Teflon, gefertigt.

Gegenstand der Erfindung ist auch der metallgedruckte Einsatz (34) mit Kanalbildnern (18) und Verbindungsstegen (36) zur Herstellung der Matrize (10) aus separat hergestelltem Einsatz und separat hergestellter Schale (56).

Die Matrize (10) umfassend die Schale (56) und die über Verbindungsstege (36) mit deren innerer Seitenwand (22) verbundene Kanalbildner (18) kann auch aus einem Stück gefertigt sein, wobei die gesamte Matrize metallgedruckt ist. Die Schale (56) kann eine äußere Ummantelung (58) aufweisen, die als Halterung für die Matrize (10) fungiert. Diese äußere Ummantelung (58) kann aus einem Kunststoffmaterial, vorzugsweise Teflon, gefertigt sein.

Ausführungsbeispiele der Erfindung sind in den Figuren dargestellt und werden in der nachfolgenden Beschreibung näher erläutert.

Es zeigen:
- Figur 1: eine Matrize nach dem Stand der Technik im Längsschnitt
- Figur 2: eine Matrize nach dem Stand der Technik in einer Draufsicht auf die Eintrittsseite
- Figur 3: eine erste Ausführungsform einer erfindungsgemäßen Matrize im Längsschnitt
- Figur 4: eine erste Variante der Ausführungsform gemäß Figur 1 im Längsschnitt
- Figur 5: eine zweite Variante der Ausführungsform gemäß Figur 1 im Längsschnitt
- Figur 6: einen metallgedruckten Einsatz gemäß der in Figur 3 dargestellten zweiten Variante im Längsschnitt
- Figur 7: eine zweite Ausführungsform einer erfindungsgemäßen Matrize in einer Draufsicht auf die Eintrittsseite
- Figur 8: die zweite Ausführungsform gemäß Figur 7 in einer Draufsicht auf die Austrittsseite
- Figur 9: die zweite Ausführungsform gemäß Figur 7 in einer 3D-Darstellung von der Aus-trittsseite
- Figur 10: die zweite Ausführungsform gemäß Figur 7 in einer geschnittenen 3D-Darstellung
- Figur 11: die zweite Ausführungsform gemäß Figur 7 in einer 3D-Darstellung von der Ein-trittsseite
- Figur 12: eine dritte Ausführungsform einer erfindungsgemäßen Matrize im Längsschnitt
- Figur 13: die dritte Ausführungsform gemäß Figur 12 in einer Draufsicht auf die Eintrittsseite
- Figur 14: die dritte Ausführungsform gemäß Figur 12 in einer Draufsicht auf die Austrittsseite
- Figur 15: die dritte Ausführungsform gemäß Figur 12 in einer 3D-Darstellung von der Aus-trittsseite
- Figur 16: die dritte Ausführungsform gemäß Figur 12 in einer geschnittenen 3D-Darstellung
- Figur 17: die dritte Ausführungsform gemäß Figur 12 in einer 3D-Darstellung von der Ein-trittsseite
- Figur 18: eine vierte Ausführungsform einer erfindungsgemäßen Matrize im Längsschnitt
- Figur 19: die vierte Ausführungsform gemäß Figur 18 in einer Draufsicht auf die Eintrittsseite
- Figur 20: die vierte Ausführungsform gemäß Figur 18 in einer Draufsicht auf die Austrittsseite
- Figur 21: die vierte Ausführungsform gemäß Figur 18 in einer 3D-Darstellung von der Aus-trittsseite
- Figur 22: die vierte Ausführungsform gemäß Figur 18 in einer geschnittenen 3D-Darstellung
- Figur 23: die vierte Ausführungsform gemäß Figur 18 in einer 3D-Darstellung von der Ein-trittsseite
- Figur 24: zeigt eine Draufsicht auf einen mit einer Matrize gemäß der zweiten oder vierten Ausführungsform extrudierten Formkörper
- Figur 25: zeigt eine Draufsicht auf einen mit einer Matrize gemäß der dritten Ausführungsform extrudierten Formkörper
- Figur 26: fotografische Darstellung der mit einer Matrize gemäß der vierten Ausführungsform extrudierten Formkörper

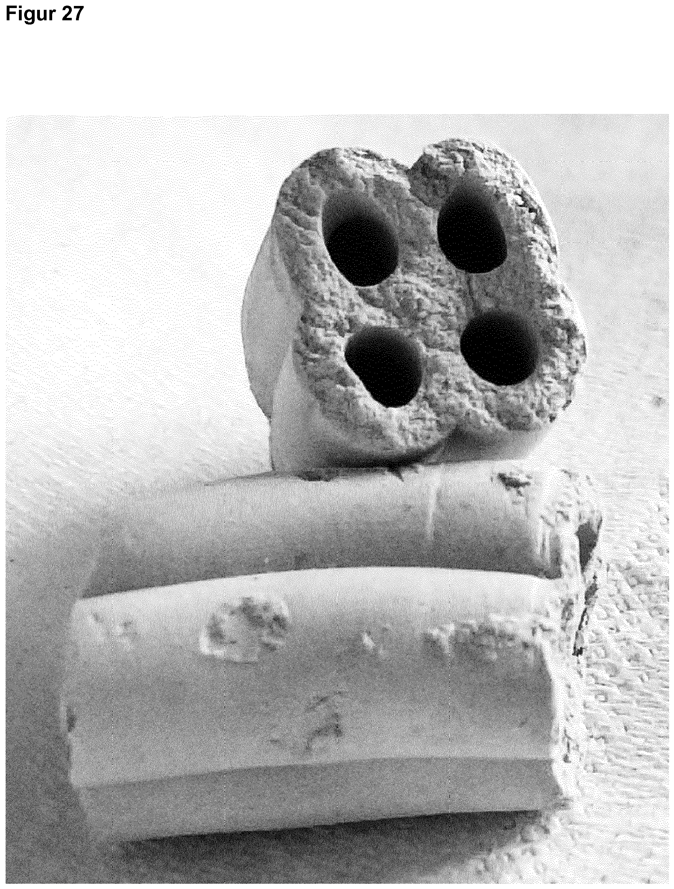

- Figur 27: fotografische Darstellung der mit einer Matrize gemäß der dritten Ausführungsform extrudierten Formkörper

Die Figuren 1 und 2 zeigen eine Matrize nach dem Stand der Technik. Dabei strömt eine extrudierbare Masse in Fließrichtung (32) von einer Eintrittsseite (12) zu einer Austrittsseite (14) der Matrize. Die Matrize umfasst eine Schale (56), deren Innenseite (22) eine Durchmesserverengung (38) aufweist, mit mehreren, Verdränger der extrudierbaren Masse darstellenden Kanalbildnern (18), die sich in Fließrichtung der extrudierbaren Masse erstrecken. Die Verdränger (18) werden von Metallstiften gebildet, die in eine Metallplatte (20) mit Öffnungen (42) eingelassen sind. Die Metallplatte (20) ist rechtwinklig mit der Innenseite (22) der Schale (56) verbunden. Dadurch ergeben sich unterhalb der Metallplatte (20) Hohlräumen (62) zur Aufnahme von extrudierbarer Masse, die sich rechtwinklig zur Fließrichtung (32) der extrudierbaren Masse erstrecken. Die Schale (56) weist eine Ummantelung (58) aus Kunststoff mit einer Außenseite (24) mit Durchmesserstufe (44) auf, die als Halterung für die Matrize dient.

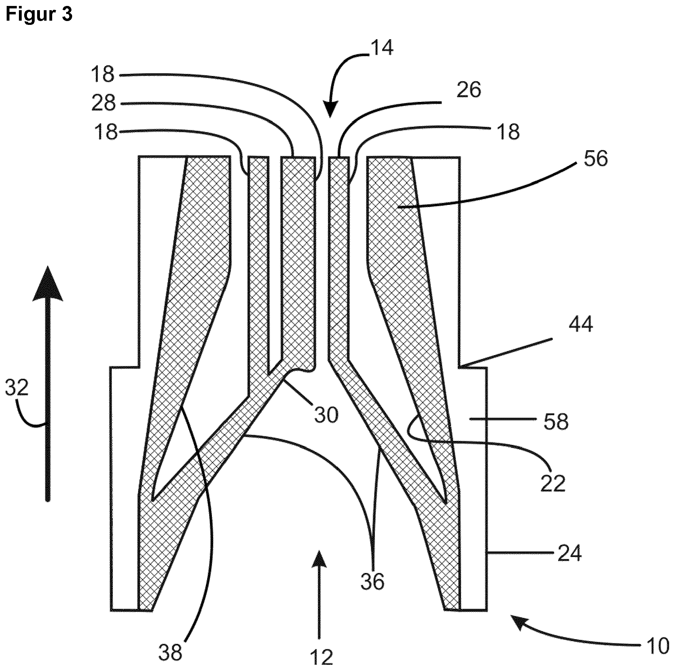

In der in Figur 3 dargestellten ersten Ausführungsform einer erfindungsgemäßen Matrize strömt eine extrudierbare Masse in Fließrichtung (32) von einer Eintrittsseite (12) zu einer Austrittsseite (14) der Matrize. Die Matrize umfasst eine Schale (56), deren Innenseite (22) eine Durchmesserverengung (38) aufweist, mit mehreren, Verdränger der extrudierbaren Masse darstellenden Kanalbildnern (18), die sich in Fließrichtung der extrudierbaren Masse erstrecken. Dabei umgeben Kanalbildner (18) mit einem kleineren ersten Durchmesser (26) ringförmig einen zentralen Kanalbildner (18) mit einem größeren zweiten Durchmesser (28). Die Kanalbildner (18) weisen zum Teil Verbindungen (30) untereinander auf und sind über Verbindungsstege (36) mit der inneren Seitenwand (22) der Schale (56) verbunden. Die Enden (40) der Kanalbildner (18) liegen dabei in der Ebene der Austrittsöffnung (50). Diese Verbindungsstege (36) verlaufen in einem Winkel von kleiner 90° von der inneren Seitenwand (22) zu den Kanalbildnern (18). Die Matrize umfassend Schale (56), Verbindungsstege (36) und Kanalbildner (18) ist aus einem Stück gefertigt und durch 3D-Metalldruck hergestellt. Die Schale (56) weist eine Ummantelung (58) aus Kunststoff mit einer Außenseite (24) mit Durchmesserstufe (44) auf, die als Halterung für die Matrize (10) dient. Die Ummantelung ist derart dimensioniert, dass sie sich in eine Matrizenplatte zur Aufnahme einer Mehrzahl von einzelnen Matrizen (10) einpassen lässt.

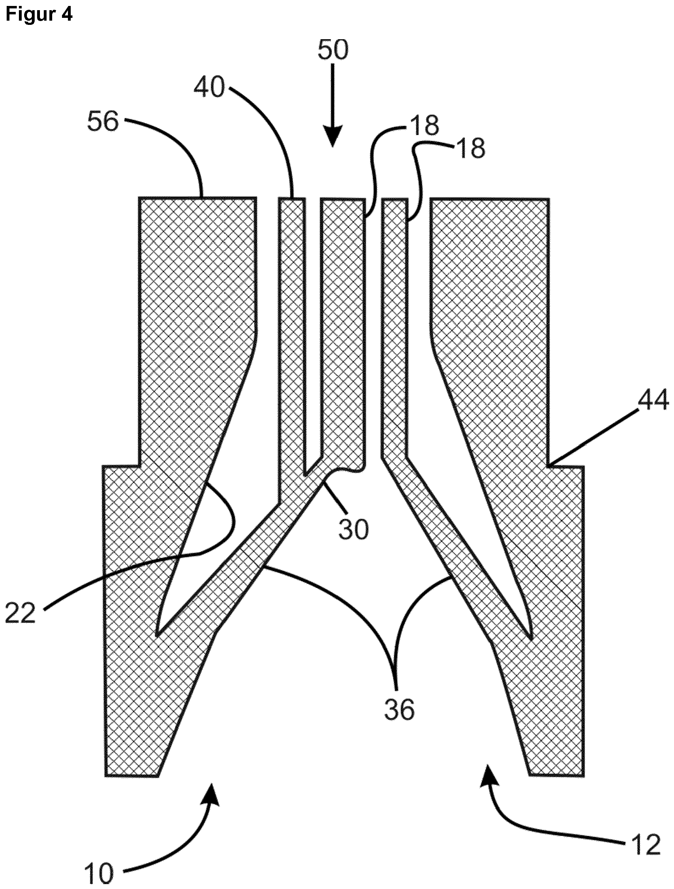

In der in Figur 4 dargestellten ersten Variante der in Figur 3 dargestellten Ausführungsform entfällt die Ummantelung (58) aus Kunststoff. Die gesamte Matrize ist so dimensioniert, dass sie sich eine Aussparung einer Matrizenplatte einpassen lässt.

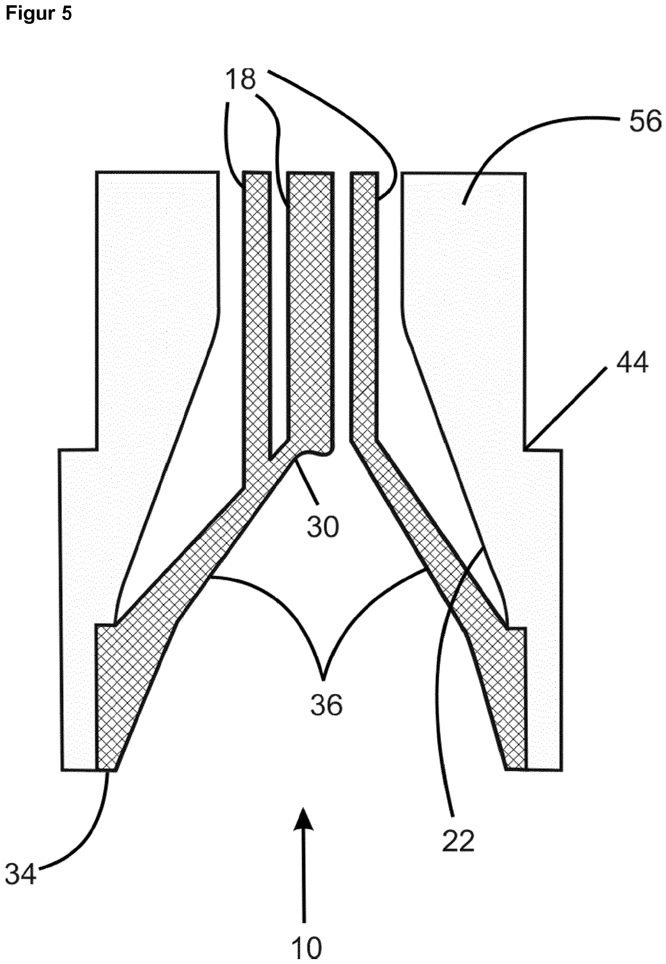

In der in Figur 5 gezeigten zweiten Variante der in Figur 3 dargestellten Ausführungsform ist nur ein Einsatz (34) umfassend Verbindungsstege (36) und Kanalbildner (18) metallgedruckt. Die Schale (56) mit Durchmesserstufe (44) und innerer Seitenwand (22) der Matrize (10) ist aus Kunststoff gefertigt. Der Einsatz (34) wird in die Schale (56) eingepasst und ist mit dieser kraft- und formschlüssig verbunden.

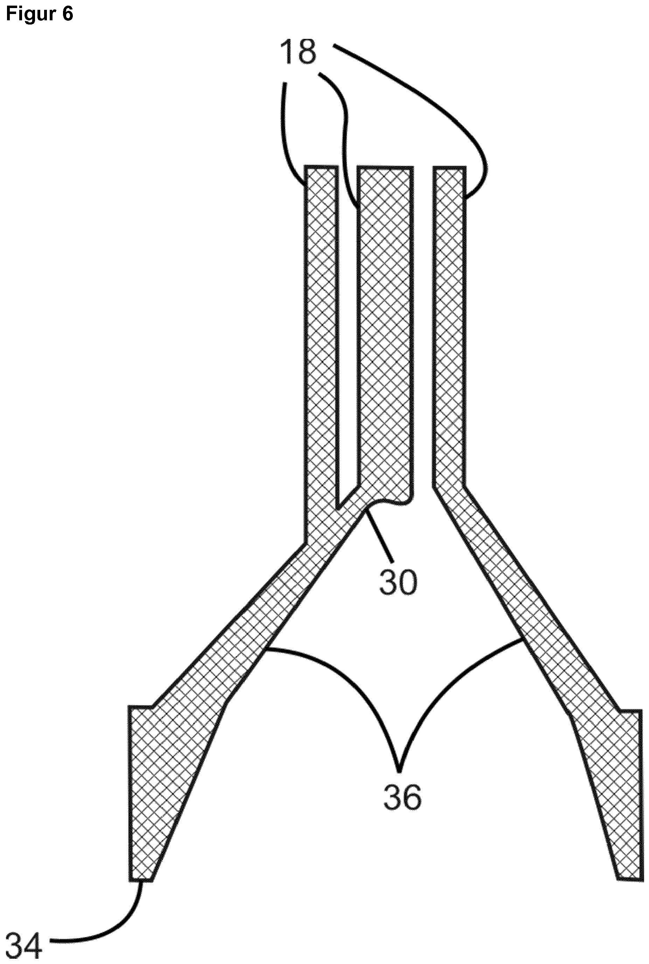

In Figur 6 wird der Einsatz (34) umfassend Verbindungsstege (36) und Kanalbildner (18) zur Herstellung einer Matrize gemäß Figur 5 separat gezeigt.

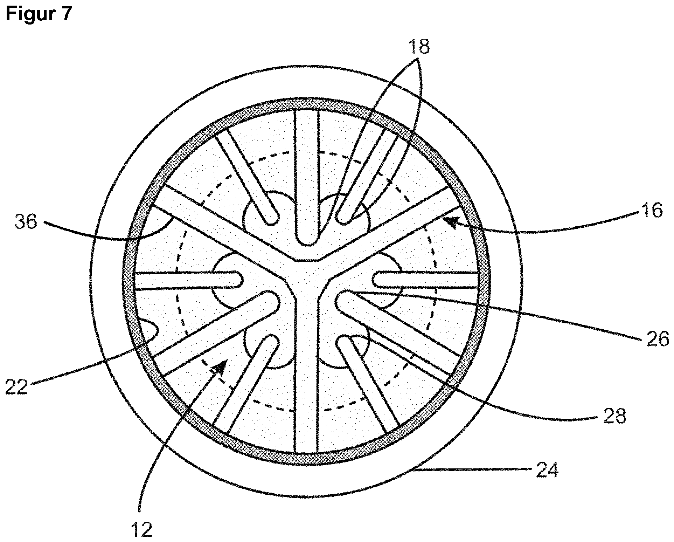

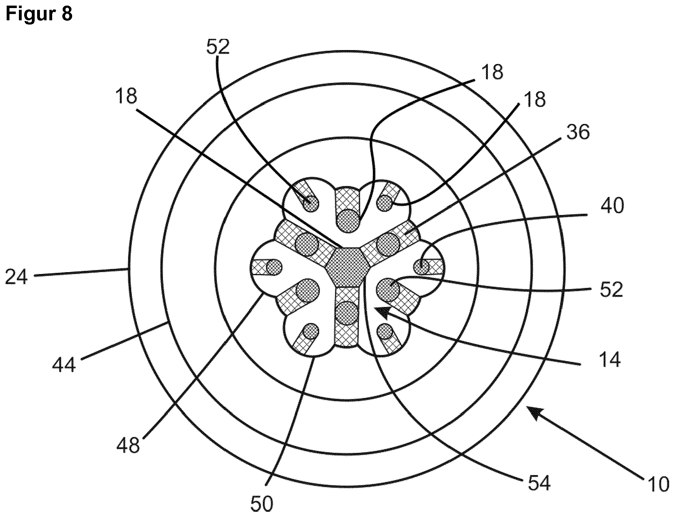

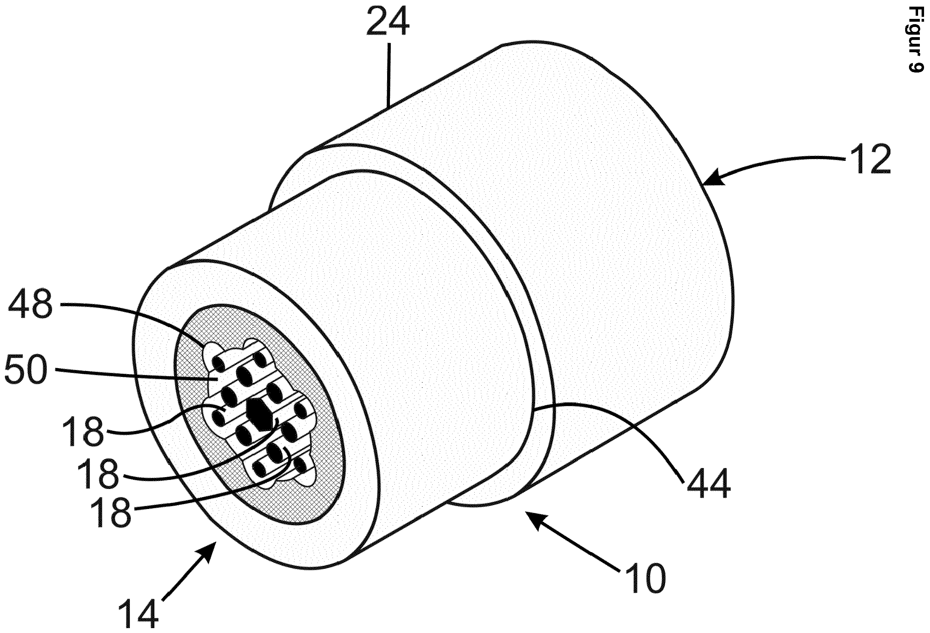

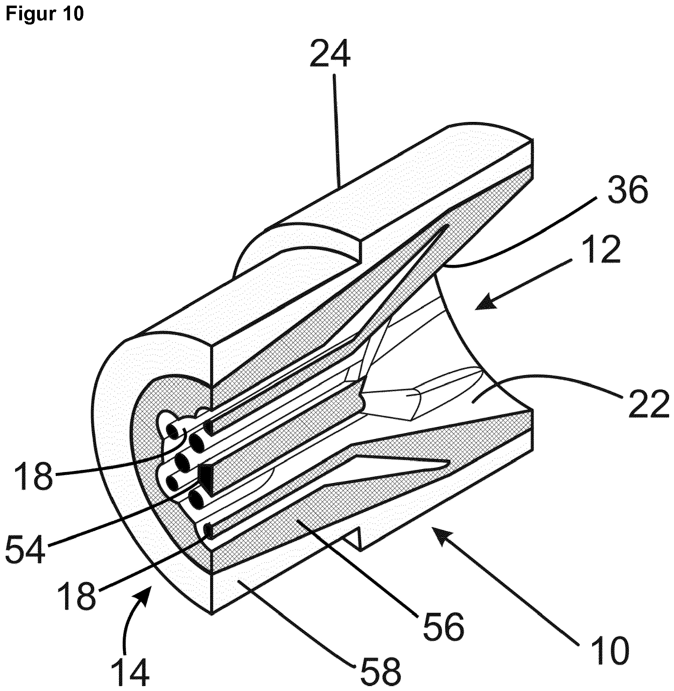

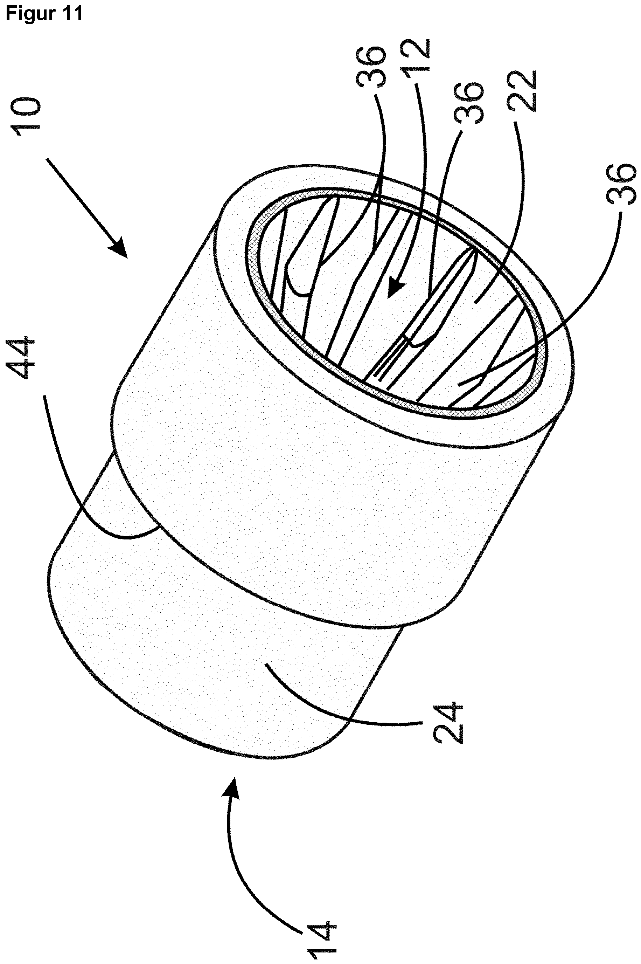

Die Figuren 7 bis 11 zeigen eine zweite Ausführungsform der erfindungsgemäßen Matrize in unterschiedlichen Darstellungen. In dieser Ausführungsform sind rundgeformte Kanalbildner (18, 52) mit einem kleineren ersten Durchmesser (26) in einem äußeren Kreis und rundgeformte Kanalbildner (18, 52) mit einem größeren zweiten Durchmesser (28) in einem konzentrischen inneren Kreis um einen zentralen Kanalbildner (18, 54) mit Sechseckprofil (54) herum angeordnet. Der zentrale Kanalbildner (18, 54) ist über drei Verbindungsstege (36) mit der inneren Seitenwand (22) der Schale (56) der Matrize (10) verbunden. Die äußeren und inneren Kanalbildner (18, 52) sind über je einen Verbindungssteg (36) mit der inneren Seitenwand (22) der Matrize (10) verbunden. Die Matrize ist aus einem Stück gefertigt und weist eine Ummantelung (58) aus Kunststoff mit einer Durchmesserstufe (44) auf.

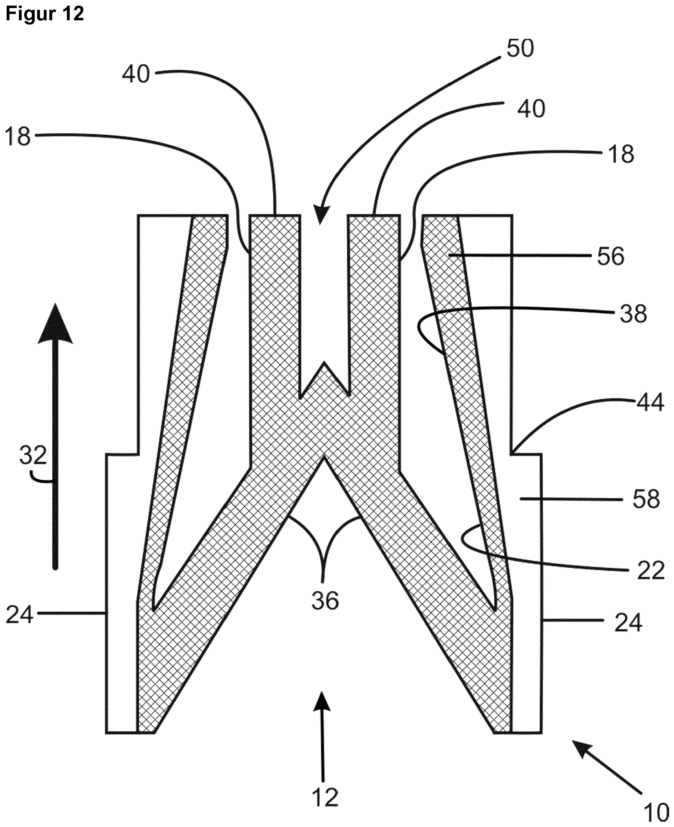

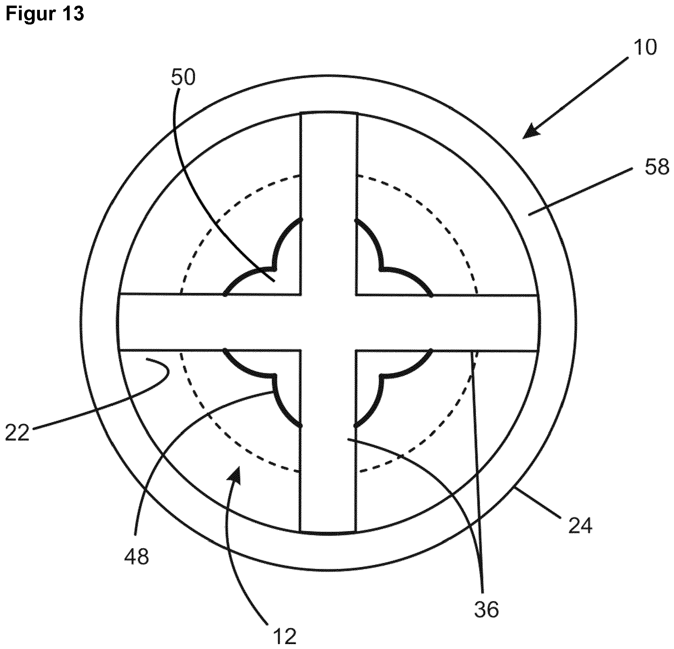

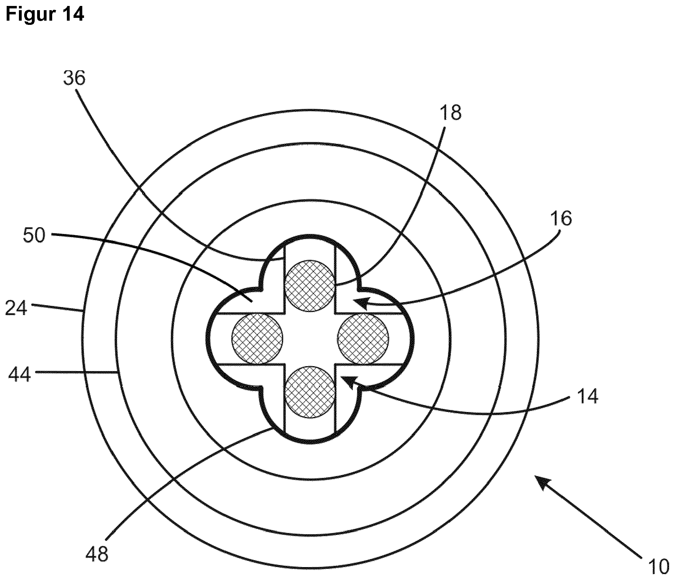

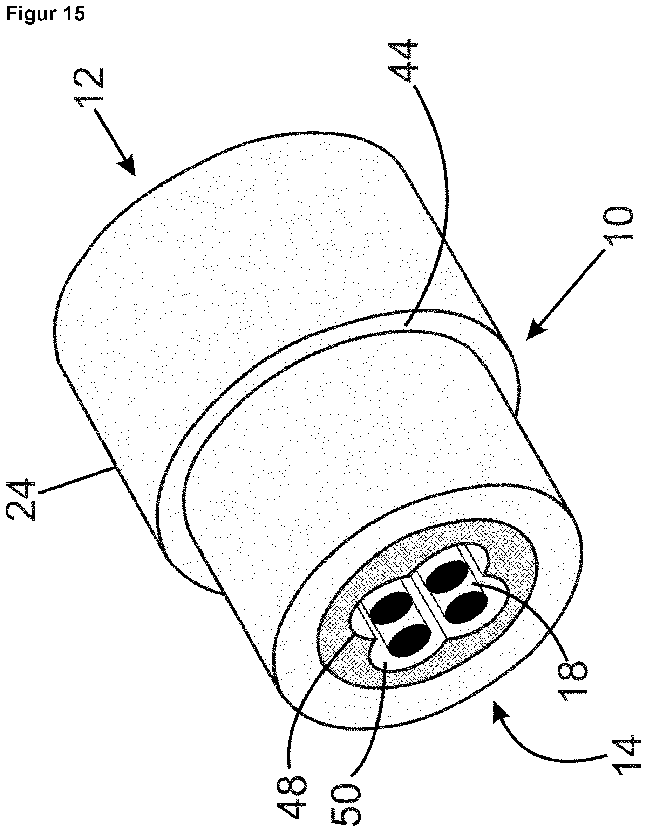

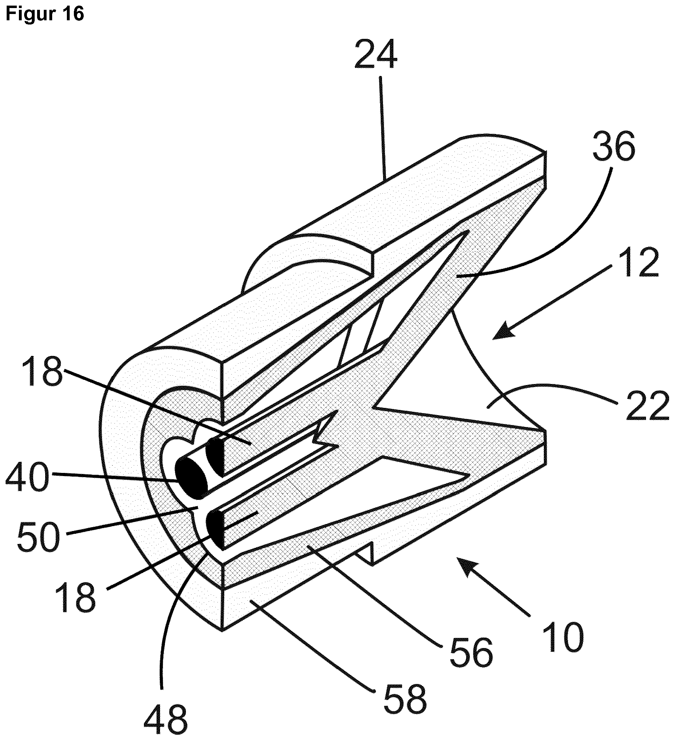

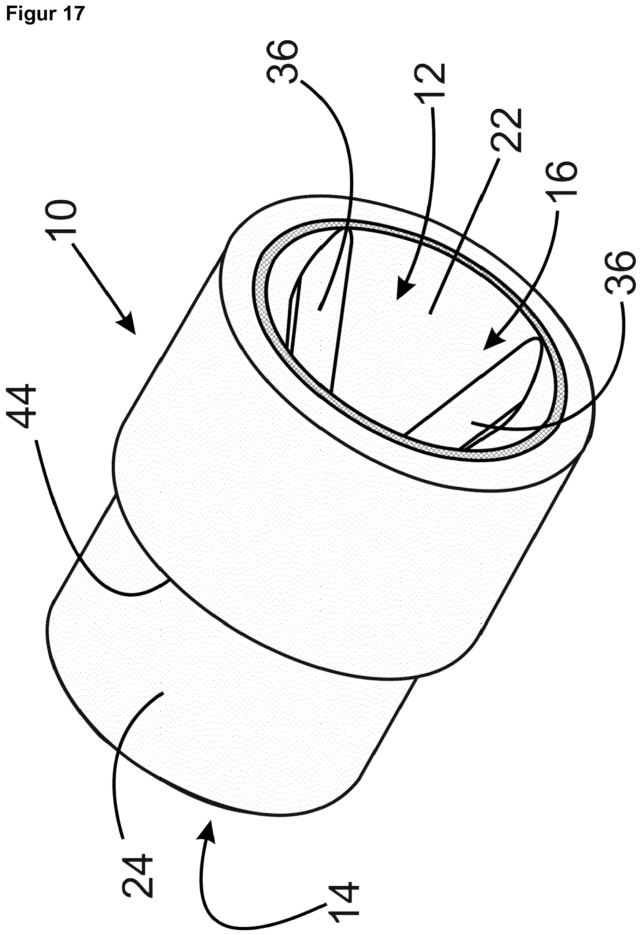

Die Figuren 12 bis 17 zeigen eine dritte Ausführungsform der erfindungsgemäßen Matrize in unterschiedlichen Darstellungen. Im Unterschied zu der in den Figuren 7 bis 11 gezeigten zweiten Ausführungsform weist diese Ausführungsform vier quadratisch angeordnete, gleich große, kreisrunde Kanalbildner (18) mit in der Ebene der Austrittsöffnung liegenden Enden (40) auf, so dass sich mit der Konturierung (48) der Austrittsöffnung (50) eine Kleeblatt-Anordnung ergibt. Jeder der vier Kanalbildner ist mit je einem Verbindungssteg (36) verbunden, die gemeinsam eine Verrippung (16) bilden.

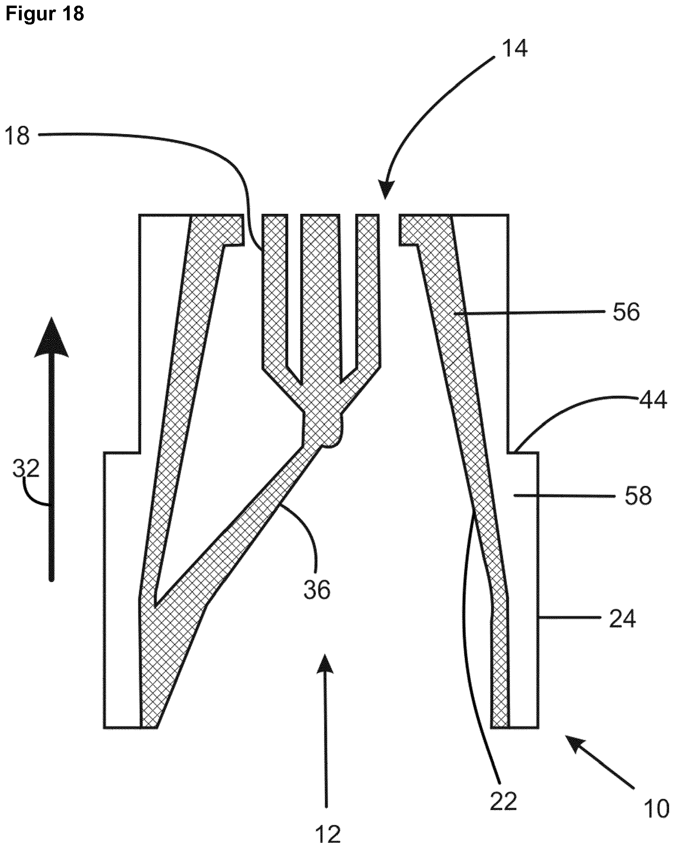

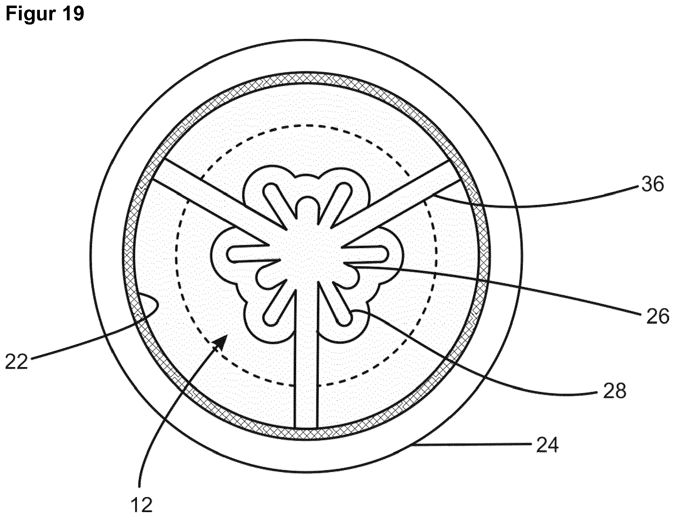

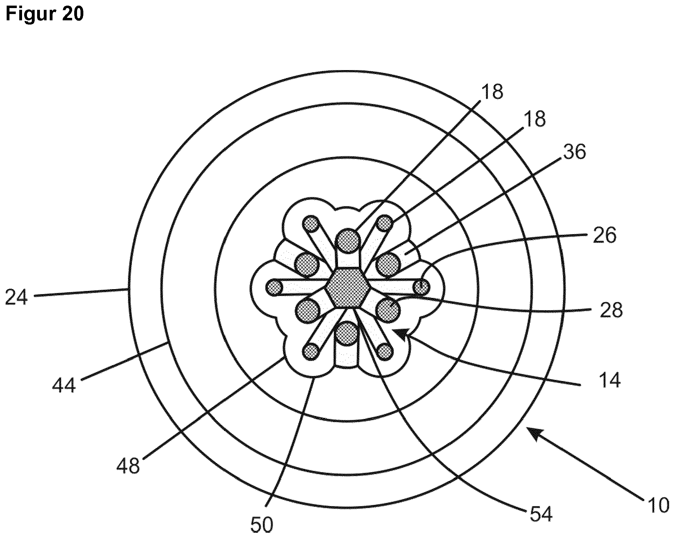

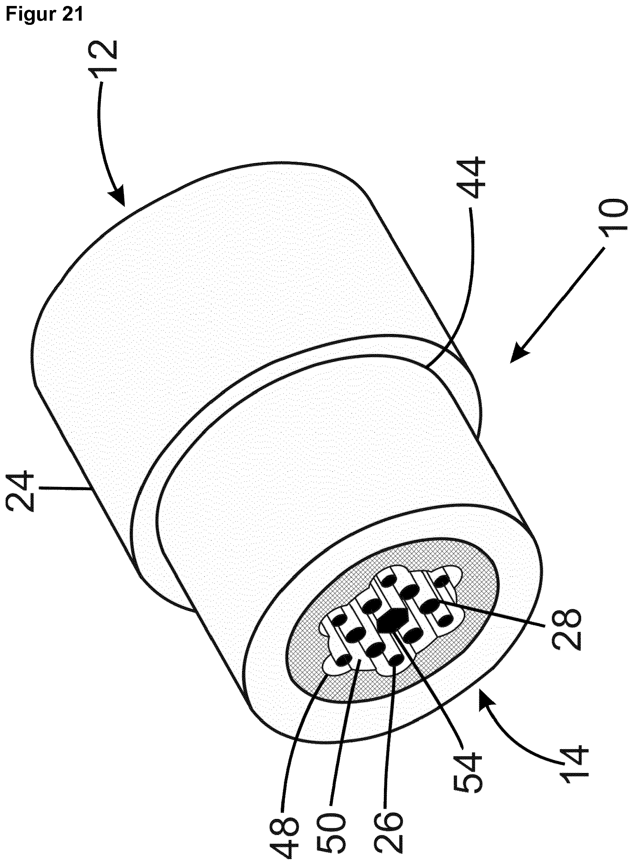

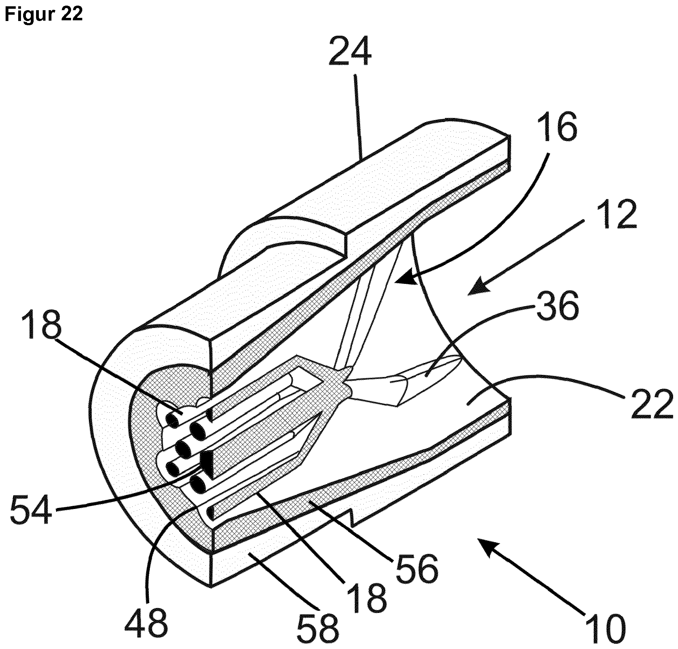

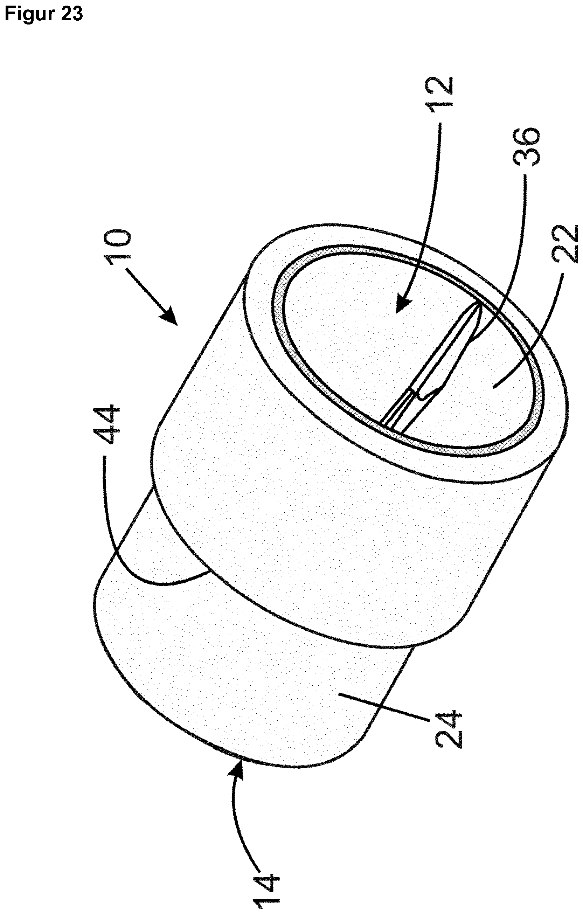

Die Figuren 18 bis 23 zeigen eine vierte Ausführungsform der erfindungsgemäßen Matrize in unterschiedlichen Darstellungen. In dieser Ausführungsform sind ebenfalls rundgeformte Kanalbildner (18) mit einem kleineren ersten Durchmesser (26) in einem äußeren Kreis und rundgeformte Kanalbildner (18) mit einem größeren zweiten Durchmesser (28) in einem konzentrischen inneren Kreis um einen zentralen Kanalbildner (18) mit Sechseckprofil (54) herum angeordnet. Im Unterschied zu der in den Figuren 7 bis 11 gezeigten zweiten Ausführungsform sind in dieser Ausführungsform alle Kanalbildner (18) mit dem zentralen Kanalbildner mit Sechseckprofil (54) verbunden und über drei Verbindungsstege (36) nach Art einer Verrippung (16) mit der inneren Seitenwand (22) der Matrize (10) verbunden.

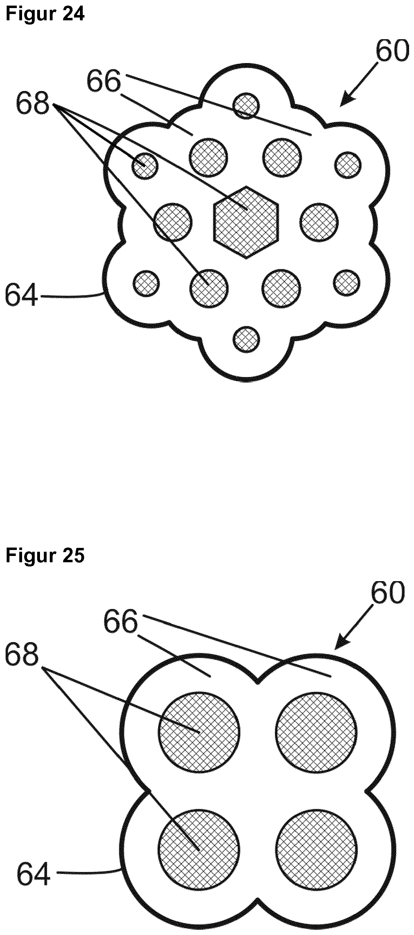

Die Figur 24 zeigt einen mit einer Matrize gemäß der dritten Ausführungsform extrudierten Formkörper (60) mit einer der Kontur der Matrizenöffnung entsprechenden Formkörperkontur (64) in Form eines Kleeblattes, Wänden (66) und kreisrunden Kanälen (68) in Kleeblatt-Anordnung.

Die Figur 25 zeigt einen mit einer Matrize gemäß der zweiten oder vierten Ausführungsform extrudierten Formkörper (60) mit einer der Kontur der Matrizenöffnung entsprechenden Formkörperkontur (64), Wänden (66) und kreisrunden bzw. sechseckigen Kanälen (68).

Die Herstellung von Formkörpern mittels sogenanntem 3D-Metallpulver-Laser-Druck ist beispielsweise in der DE 19649865 C1 beschrieben.

Zur Herstellung der Extrusionsmatrizen wird ein Verfahren zur Herstellung eines Formkörpers verwendet. Die Herstellung von Formkörpern mittels sogenanntem 3D-Metallpulver-Laser-Druck ist in der DE 19649865 C1 grundsätzlich beschrieben. Dieses Verfahren zeichnet sich dadurch aus, dass aus den entsprechenden dreidimensionalen CAD-Daten des Modells der Extrusionsmatrize durch schichtweisen Aufbau aus pulverförmigem, metallischem Werkstoff der Formkörper aufgebaut wird. Erzeugt werden die dreidimensionalen CAD-Daten des Modells der Extrusionsmatrize mit Hilfe spezieller CAD-Software.

Der Herstellungsprozess selbst zeichnet sich dadurch aus, dass ein pulverförmige, metallischer Werkstoff aus aufeinanderfolgenden Schichten aufgebaut wird. Vor dem Aufbringen der nächstfolgenden Pulverschicht wird die Pulverschicht mit einer Energiequelle in einem vorgegebenen Bereich bestrahlt. Durch die eingebrachte Energie wird das Pulver aufgeschmolzen und verbindet sich zu einer zusammenhängenden Schicht. Die Energie wird bei der Bestrahlung so gewählt, dass das Material über seine gesamte Schichtdicke vollständig aufgeschmolzen wird. Die Bestrahlung wird in mehreren Spuren über den vorgegebenen Bereich geführt, sodass jede folgende Spur die vorherige Spur teilweise überlappt, dadurch verbinden sich die einzelnen Spuren miteinander, ohne dass Poren oder ähnliche Fehlstellen entstehen. Der Spurabstand wird entsprechend gewählt. Durch die Schichtung mehrere Pulverschichten übereinander und deren Bestrahlung verbinden sich die aufgeschmolzenen Lagen aus den übereinander aufgetragenen Pulverschichten. Es wird während des Prozesses eine Schutzgasatmosphäre aufrechterhalten, die im Bereich des aufgeschmolzenen Metalls wirkt, damit wird beispielsweise eine Oxidation ausgeschlossen. Durch die Erhitzung des Pulvergrundwerkstoffs über dessen Schmelztemperatur und die Aufschmelzung über die komplette Schichtdicke entsteht ein dichter Formkörper mit hohen Festigkeitswerten.

Nach dem eigentlichen Herstellungsprozess kann abhängig vom verwendeten Werkstoff und des genauen Designs noch eine Nachbearbeitung nötig sein. Hierbei kommen thermische Verfahren z.B. zur Erhöhung der Festigkeit oder zum Abbau von Spannungen in Frage. Es kommen außerdem Verfahren zum Einsatz, welche die Oberflächeneigenschaften des Formkörpers modifizieren, beispielsweise ein Nachpolieren der Oberfläche mittels Sandstrahl.

Die Erfindung wird durch die nachstehenden Beispiele näher erläutert.

### Beispiele

### Beispiel 1 Herstellung von 3D-gedruckten Extrusionsmatrizen

Herstellungsprozess: Powderbed Fusion (ASTM, ISO), alternativ werden auch folgende Bezeichnungen für denselben Prozess verwendet (Selektives Laserstrahlschmelzen (VDI). Vor allem von Anlagenherstellern werden auch folgende Bezeichnungen verwendet Selektives Lasersintern, Selective Laser Melting SLM™ (Realizer, SLM Solutions), Direktes Metall-Laser-Sintern DMLS® (EOS), LaserCUSING® (Concept Laser) u. a. Markennamen
Anlagenbezeichnung: Concept Laser - M2 cusing
CAD-Software: Autodesk - Inventor 2017 (für die 3D-Modelierung)
Slicer-Software: Materialise - Magics 19 (zur Vorbereitung der 3D-Modelle für den Druck)

### Verwendetes Material:

### Rohmaterial:

- Edelstahl - Metallpulver
- Lieferant: Concept Laser
- chemische Zusammensetzung entsprechend X2 CrNiMo 17-13-2, 316L, 1.4404.
- Partikelgrößenverteilung: D₁₀ = 18,72 µm, D₅₀= 30,10 µm, D₉₀ = 45,87 µm
- Weitgehend runde Partikelform

### Materialkennwerte:

- Härte: 190 - 220 HV
- Dichte: 99,5% - 99,9%
- Bruchdehnung: 41% - 52 %
- Minimale Zugfestigkeit R_{m, min}: 614 MPa
- Minimale Streckgrenze R_{p,0,2}, ₘᵢₙ: 486 MPa

### Alternatives Material:

- bevorzugt metallischer Werkstoff
- bevorzugt hohe Abrasionsfestigkeit (Werkzeugstahl)
- (Allerdings sollten fast alle Metalle und auch festere Kunststoffe funktionieren)
- Partikelgröße bevorzugt kleiner 100µm, bevorzugt zwischen 10 µm und 50 µm

### Verwendete Prozessparameter:

### Prozessparameter:

- Schutzgas: Stickstoff
- Schichtstärke: 25µm
- Laserleistung: 150 - 380 W
- Laserspotdurchmesser: 100 µm
- Laserspotgeschwindigkeit: 300 - 1100 mm/s

### Alternative Prozessparameter:

- Schutzgas: bevorzugt Edelgas, abhängig von der Reaktivität des verwendeten Metalls
- Schichtstärke: bevorzugt kleiner 60 µm
- Laserleistung: bevorzugt zwischen 50 - 600 W, in Abhängigkeit der anderen Prozessparameter
- Laserspotdurchmesser: bevorzugt kleiner 500 µm
- Laserspotgeschwindigkeit: bevorzugt 100 - 8000 mm/s

Zur Erzeugung der dreidimensionalen CAD-Daten des Modells der Extrusionsmatrize wird im vorliegenden Fall "Autodesk - Inventor 2017" verwendet. Nach der Modellierung des dreidimensionalen Modells wird dieses in ein STL-Format überführt, bei dem die Oberfläche des Modells durch Dreiecksfacetten beschrieben wird. Das STL-Format dient zur einfacheren weiteren Verarbeitung des Modells in einer speziellen Datenaufbereitungssoftware. Es wird hierfür das Programm Materialise - Magics verwendet. In diesem Programm wird mittels eines Build-Prozessors bestimmt, welche Parameter und welche Strategien im nachfolgenden Herstellungsprozess verwendet werden. Die ausgegebene Datei wird dann direkt am 3D-Drucker eingelesen.

Nach dem eigentlichen Herstellungsprozess wird im vorliegenden Fall wird ein sechsstündiges Spannungsarmglühen durchgeführt und werden Stützstrukturen spanend entfernt.

### Beispiel 2 Herstellung einer Katalysatormasse

0,8991 kg (30 Gew.-% bezogen auf die Mischung der Diatomeenerden) einer Diatomeenerde des Typs MN der Firma EP Minerals, 1,4985 kg (50 Gew.-% bezogen auf die Mischung der Diatomeenerden) einer Diatomeenerde des Typs Masis der Firma Diatomite SP CJSC und 0,5994 kg (20 Gew.-% bezogen auf die Mischung der Diatomeenerden) einer Diatomeenerde des Typs Diatomite 1 der Firma Mineral Resources Ltd. werden 30 Minuten mit 45 Umdrehungen pro Minute in einem Röhnradmischer (Firma Engelsmann, Behältervolumen 32 Liter) gemischt. In einem Mix-Muller (Firma Simpson, Baujahr 2007, Behältervolumen 30 Liter) wird die Mischung der Diatomeenerden vorgelegt und 2 Minuten bei 33 Umdrehungen pro Minute gekollert. Daraufhin wird über einen Zeitraum von 2 Minuten eine erste Lösung bestehend aus 1,3706 kg wässriger KOH-Lösung (47,7 Gew.-%) und 0,532 kg Ammoniumpolyvanadat (Firma Treibacher) zugegeben und 1 Minute weiter gekollert. Über einen Zeitraum von 2 Minuten wird 2,1025 kg 48-prozentige Schwefelsäure zugegeben und eine weitere Minute bei 33 Umdrehungen pro Minute gekollert. Als nächstes werden 0,3 kg K₂SO₄ (Firma K+S Kali GmbH) in 1,587 kg einer 50-prozentigen wässrigen Cs₂SO₄-Lösung gegeben, über einen Zeitraum von 2 Minuten in den Mix-Muller gegeben und 1 weitere Minute bei 33 Umdrehungen pro Minute gekollert und dann unter fortgesetzten Kollern 180 g einer Stärkelösung (7,39 Gew.-% Kartoffelstärke in VE-Wasser) zugegeben. Die erhaltene Masse wird weiterhin bei 33 Umdrehungen pro Minute weitergekollert, bis die gesamte Kollerzeit ab Zugabe der Diatomeenerde insgesamt 15 Minuten beträgt.

### Beispiele 3, 4 Herstellung von Katalysatorformkörpern

Die Geometrie des Formkörpers wird durch eine Matrize festgelegt, durch die die zu extrudierende Masse unter hohem Druck gefördert wird. Es wurden Matrizen gemäß den Figuren 18 bis 23 (Beispiel 3) bzw. 12 bis 17 (Beispiel 4) verwendet. Die extrudierten Formkörper wiesen Geometrien gemäß den Figuren 24 bzw. 25 auf.

Hierbei kommt ein Schneckenextruder mit einer Schnecke zum Einsatz. Die Feststoffzugabe in die Schnecke erfolgt von oben. Der Extruder wird mit Wasser gekühlt. Die Drehgeschwindigkeit der Förderschnecke im Extruder beträgt 10 Umdrehungen pro Minute. Die Temperatur des Feststoffs bei der Zugabe und der Formkörper beim Austritt aus dem Extruder beträgt um die 50°C. Der Durchsatz durch einen Extruder beträgt 6000 kg pro Tag. Unter anderem weil die Fördergeschwindigkeit der Stränge nicht konstant ist, erhält man keine einheitliche Länge, sondern vielmehr eine Längenverteilung. Weiterhin ist die durchschnittliche Länge von der Geometrie der Matrize abhängig. Die Formkörper werden anschließend für 2 Stunden bei 120°C getrocknet und für 3 Stunden bei 475°C kalziniert. Über Siebvorrichtungen werden zu große und zu kleine Formkörper entfernt.

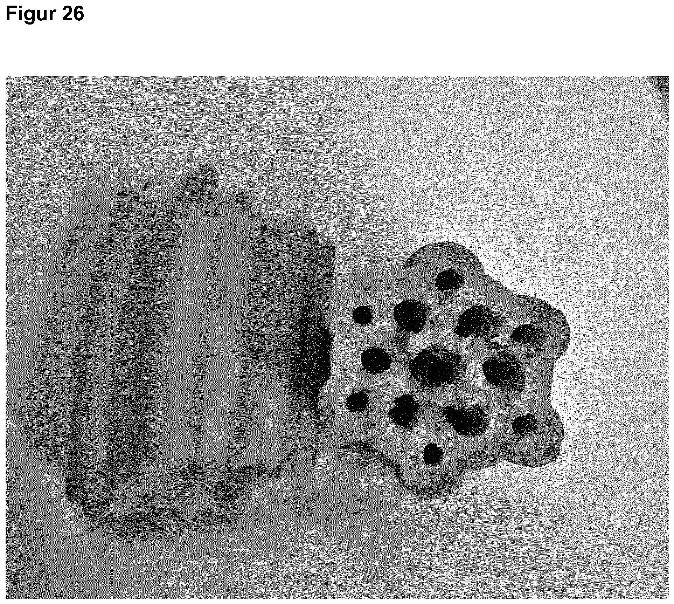

Die erhaltenen Extrudate sind in den Figuren 26 (Beispiel 3) bzw. 27 (Beispiel 4) wiedergegeben.

### Bezugszeichenliste

- 10: Matrize
- 12: Eintrittsseite der Matrize
- 14: Austrittsseite der Matrize
- 16: Verrippung
- 18: Kanalbildner (≙ Verdränger, ≙ Pins)
- 20: Metallplatte
- 22: innere Seitenwand der Matrize
- 24: Außenwand der Ummantelung
- 26: erster Durchmesser Kanalbildner
- 28: zweiter Durchmesser Kanalbildner
- 30: Verbindung der Kanalbildner
- 32: Fließrichtung der extrudierbaren Masse
- 34: metallgedruckter Einsatz
- 36: Verbindungssteg
- 38: Durchmesserverjüngung der inneren Seitenwand
- 40: Ende der Kanalbildner
- 42: Öffnungen der Metallplatte
- 44: Durchmesserstufung der Ummantelung
- 48: Konturierung der Austrittsöffnung
- 50: Austrittsöffnung
- 52: Rundform der Kanalbildner
- 54: Mehreckprofilform der Kanalbildner
- 56: Schale
- 58: Ummantelung
- 60: extrudierte Katalysator-,Träger oder Adsorbensformkörper
- 62: Hohlraum
- 64: Kontur der extrudierten Formkörper
- 66: Wände der extrudierten Formkörper
- 68: Kanäle der extrudierten Formkörper

## Patentansprüche

1. Matrize (10) zur Extrusion von Katalysator-, Katalysatorträger- oder Adsorbensformkörper (60) in Fließrichtung (32) einer extrudierbaren Masse von einer Eintrittsseite (12) zu einer Austrittsseite (14) der Matrize umfassend eine Schale (56) und einen oder mehrere, Verdränger der extrudierbaren Masse darstellende Kanalbildner (18), die sich in Fließrichtung der extrudierbaren Masse erstrecken, **dadurch gekennzeichnet, dass** die Kanalbildner (18) metallgedruckt sind.

2. Matrize (10) nach Anspruch 1, **dadurch gekennzeichnet, dass** die Verdränger der extrudierbaren Masse darstellenden Kanalbildner (18) über einen oder mehrere Verbindungsstege (36) an einer inneren Seitenwand (22) der Matrize (10) befestigt sind oder eine Verbindung (30) untereinander aufweisen.

3. Matrize (10) nach Anspruch 2, **dadurch gekennzeichnet, dass** diese frei von Hohlräumen zur Aufnahme von extrudierbarer Masse ist, die sich rechtwinklig zur Fließrichtung (32) der extrudierbaren Masse erstrecken.

4. Matrize (10) nach Anspruch 2 oder 3, **dadurch gekennzeichnet, dass** diese frei von rechtwinklig verlaufenden Verbindungen von Kanalbildnern (18) zu der inneren Seitenwand (22) der Matrize (10) ist.

5. Matrize (10) gemäß einem der Ansprüche 2 bis 4, **dadurch gekennzeichnet, dass** ein Teil der Kanalbildner (18) miteinander verbunden ist.

6. Matrize (10) nach einem der Ansprüche 1 bis 5, **dadurch gekennzeichnet, dass** diese zur Extrusion von Katalysator- oder Trägerformkörpern (60) 2 bis 20 Kanalbildner (18) parallel zur Fließrichtung (32) der extrudierbaren Masse aufweist.

7. Matrize (10) nach einem der Ansprüche 1 bis 6, **dadurch gekennzeichnet, dass** die sich in Fließrichtung (32) der extrudierbaren Masse erstreckenden Kanalbildner (18) voneinander verschiedene erste und zweite Durchmesser (26, 28) aufweisen, eine kreisrunde (52) oder eine Mehreckprofilkontur (54) aufweisen.

8. Matrize (10) nach einem der Ansprüche 1 bis 7, **dadurch gekennzeichnet, dass** sie aus einem metallgedruckten Einsatz (34), der die Kanalbildner (18) und Verbindungsstege (36) aufweist, und der Schale (56) zusammengesetzt ist.

9. Matrize (10) nach Anspruch 8, **dadurch gekennzeichnet, dass** die Schale (56) aus einem Kunststoffmaterial, vorzugsweise Teflon, gefertigt ist.

10. Matrize (10) nach einem der Ansprüche 1 bis 7, **dadurch gekennzeichnet**, **dadurch gekennzeichnet, dass** Schale (56) und die über Verbindungsstege (36) mit deren innerer Seitenwand (22) verbundene Kanalbildner (18) aus eine Stück gefertigt und metallgedruckt sind.

11. Matrize (10) nach Anspruch 10, **dadurch gekennzeichnet, dass** die Schale (56) eine äußere Ummantelung (58) aufweist, die als Halterung für die Matrize (10) fungiert.

12. Matrize (10) nach Anspruch 11, **dadurch gekennzeichnet, dass** die äußere Ummantelung (58) aus einem Kunststoffmaterial, vorzugsweise Teflon, gefertigt ist.

13. Metallgedruckten Einsatz (34) mit Kanalbildnern (18) und Verbindungsstegen (36) zur Herstellung einer Matrize gemäß Anspruch 8 oder 9.

14. Verfahren zur Herstellung mittels 3 D-Metalldruck einer metallgedruckten Matrize (10) oder eines metallgedruckten Einsatzes (34) zur Herstellung einer Matrize (10) zur Extrusion von Katalysator-, Katalysatorträger- oder Adsorbensformkörper (60), mit zumindest nachfolgenden Verfahrensschritten:
a) Aufbringen eines Metallpulvers in aufeinanderfolgenden Schichten,
b) vor Aufbringen einer nachfolgenden Metallpulverschicht Bestrahlung der vorhergehenden Pulverschicht mit einem Laser in einem vorgegebenen Bereich,
c) Aufschmelzen des Metallpulvers in dem vorgegebenen Bereich über dessen gesamte Schichtdicke der Metallpulverschicht durch die in Schritt b) eingebrachte Energie und Bildung einer kompakten Metallschicht, die mit der darunter liegenden kompakten Metallschicht verbunden ist,
d) durch abwechselndes Auftragen und Aufschmelzen mehrerer Pulverschichten übereinander Erzeugung der metallgedruckten Matrize (10) oder des metallgedruckten Einsatzes (34) als Verbindung aufgeschmolzener Lagen der übereinander aufgebrachten Metallpulverschichten.

15. Verfahren nach Anspruch 14 mit den zusätzlichen Schritten:
e) experimentelle Untersuchung der Matrize (10) hinsichtlich des Strömungsverhaltens der extrudierten Masse in der Matrize,
f) wiederholte Durchführung der Schritte a) bis e) und ggf. f), wobei der Aufbau der Matrize (10) verändert wird.

16. Verfahren zur Entwicklung neuer mittels Extrusion hergestellter Katalysator-, Katalysatorträger- oder Adsorbensformkörper (60) mit den Schritten:
(i) Herstellung mehrerer verschiedener Matrizen (10) mit unterschiedlichem Aufbau mit dem Verfahren gemäß Anspruch 14, wobei die Herstellung der Matrizen (10) gleichzeitig oder nacheinander erfolgen kann,
(ii) Extrusion verschiedener Formkörper (60) mit den verschiedenen Matrizen (10),
(iii) experimentelle Untersuchung der verschiedenen Formkörper (60) im Hinblick auf ihre physikalischen und chemischen Eigenschaften in einer Schüttung,
(iv) gegebenenfalls Wiederholung der Schritte (i) bis (iii), wobei der Aufbau der Matrizen (10) verändert wird.

17. Verfahren nach Anspruch 16, **dadurch gekennzeichnet, dass** die Formkörper (60) hinsichtlich ihres Druckverlustes und/oder ihrer katalytischen Aktivität in einer Schüttung experimentell untersucht werden.
